# FASCICULE DE BREVET EUROPEEN

(11) **EP 4 154 348 B1**
(45) Date de publication et mention de la délivrance du brevet: **21.05.2025**
(21) Numéro de dépôt: 21725547.0
(22) Date de dépôt: 18.05.2021
(51) Int. Cl.: H01M 50/103, H01M 50/105, H01M 50/129, H01M 50/211, H01M 50/547, H01M 50/557

(54) **ELÉMENT ÉLECTROCHIMIQUE ET BATTERIE CORRESPONDANTE**
ELEKTROCHEMISCHE ZELLE UND BATTERIE DAFÜR
ELECTROCHEMICAL CELL AND CORRESPONDING BATTERY

(30) Priorité: 19.05.2020 FR 2005031
(43) Date de publication de la demande: 29.03.2023
(73) Titulaire: SAFT, 92300 Levallois-Perret (FR)
(72) Inventeur: BLONZ, Valentin, 33110 LE BOUSCAT (FR); BEUGNON, Alexandre, 33290 LE PIAN MEDOC (FR)
(74) Mandataire: Lavoix
(86) Numéro de dépôt international: PCT/EP2021/063112
(87) Numéro de publication internationale: WO 2021/233898

(56) Documents cités:
- WO-A1-2015/156327
- US-A- 5 419 982
- US-A1- 2013 130 087
- US-A1- 2019 237 830

## Description

La présente invention concerne un élément électrochimique pour batterie, du type mentionné dans le préambule de la revendication 1. Un tel élément électrochimique est connu de US5419982A.

La batterie fabriquée à partir des éléments électrochimiques comprend une enveloppe en matière plastique. L'élément électrochimique de ce document est utilisé pour fabriquer des batteries parallélépipédiques.

D'autres ensembles électrochimiques ou batteries électrochimiques sont connus de CN108400385 ; WO2016/205663A1 (EP3311443) ; KR20160041402A ; US10490781B2 (US20150364729A) : CN202373667U ; US2013101891A1 ; WO2012057854A1 ; WO2005039013A2 (EP1678804) ; WO03026042A1 (EP1428272) ; et WO9120100A1 (EP0487699).

L'invention a pour but de proposer un élément électrochimique qui ait une capacité de stockage d'énergie électrique importante pour un volume donné. Par ailleurs, l'élément électrochimique devrait être facile et économique à fabriquer et avoir une sécurité de fonctionnement importante.

A cet effet, l'invention a pour objet un élément électrochimique pour batterie précité, caractérisé par la partie caractérisante de la revendication 1.

Selon des modes de réalisation particuliers de l'élément électrochimique pour batterie, celui-ci peut comporter l'une ou plusieurs des caractéristiques suivantes :
- le premier coin et le deuxième coin sont adjacents à un même des premiers bords ou seconds bords, notamment les premiers bords étant chacun un bord long et les seconds bords étant chacun un bord court ;
- les deux premiers bords sont sensiblement parallèles l'un de l'autre et/ou les deux seconds bords sont sensiblement parallèles l'un de l'autre, et notamment sensiblement perpendiculaires aux premiers bords ;
- l'élément électrochimique comprend exactement un seul premier terminal de la première polarité et un seul second terminal de la seconde polarité ;
- l'élément électrochimique comprend deux premiers terminaux de la première polarité disposés dans le premier coin et un troisième coin du quadrilatère enveloppant, et deux seconds terminaux de la seconde polarité disposés dans le deuxième coin et un quatrième coin du quadrilatère enveloppant ;
- soit le premier coin et le troisième coin sont des coins adjacents et le deuxième coin et le quatrième coin sont des coins adjacents,
   soit le premier coin et le troisième coin sont des coins opposés et le deuxième coin et le quatrième coin sont des coins opposés ;
- la feuille en métal de la première paroi et la feuille en métal de la seconde paroi sont formées par une seule feuille de base en métal, la feuille de base en métal comprenant une portion repliée formant un des premiers ou seconds bords, les autres des premiers bords et seconds bords étant formés par des chants de la feuille de base en métal superposés et fixés l'un à l'autre, notamment par thermo-soudage ;
- la feuille en métal de la première paroi et la feuille en métal de la seconde paroi sont deux feuilles de base en métal individuelles et séparées dont chacune comporte quatre chants et dans lequel chacun des premiers bords et des seconds bords est formé par deux chants des deux feuilles de base superposés et fixés l'un à l'autre, notamment par thermo-soudage ; et
- le ou chaque premier terminal de la première polarité et/ou chaque second terminal de la seconde polarité est constitué d'une superposition de feuilles d'électrode et est non-pliée.

L'invention a en outre pour objet une batterie du type comprenant un carter et au moins un élément électrochimique tel que défini ci-dessus.

Selon des modes de réalisation particuliers de la batterie, celle-ci peut comporter l'une ou plusieurs des caractéristiques suivantes :
- la batterie comprend un dispositif de refroidissement et le dispositif de refroidissement est adapté pour évacuer de la chaleur de l'élément électrochimique, et en particulier d'un bord long ou du bord formé par la portion repliée.

L'invention sera mieux comprise à la lecture de la description qui va suivre, donnée uniquement à titre d'exemple et faite en se référant aux dessins annexés, sur lesquels :
**[****Fig 1****]** La Figure 1 est une vue schématique de face d'un élément électrochimique de l'état de la technique;
**[****Fig 2****]** La Figure 2 est une vue schématique de face d'une batterie comprenant un élément électrochimique selon un premier mode de réalisation de l'invention;
**[****Fig 3****]** La Figure 3 est une vue de face de l'élément électrochimique de la Figure 2, une paroi de l'enveloppe étant omise ;
**[****Fig 4****]** La Figure 4 est une vue schématique en coupe de l'élément électrochimique de la Figure 2 ;
**[****Fig 5****]** La Figure 5 est une vue schématique de face d'une batterie comprenant un élément électrochimique selon un deuxième mode de de réalisation de l'invention;
**[****Fig 6****]** La Figure 6 est une vue de face de l'élément électrochimique de la Figure 5, une paroi de l'enveloppe étant omise ;
**[****Fig 7****]** La Figure 7 est une vue schématique en coupe de l'élément électrochimique de la Figure 6 ;
**[****Fig 8****]** La Figure 8 est une vue schématique de face d'une batterie comprenant un élément électrochimique selon un troisième mode de de réalisation de l'invention, la vue étant analogue à celle de la Figure 5; et
**[****Fig** 9] La Figure 9 est une vue de face de l'élément électrochimique de la Figure 5, une paroi de l'enveloppe étant omise, la vue étant analogue à celle de la Figure 6 ;

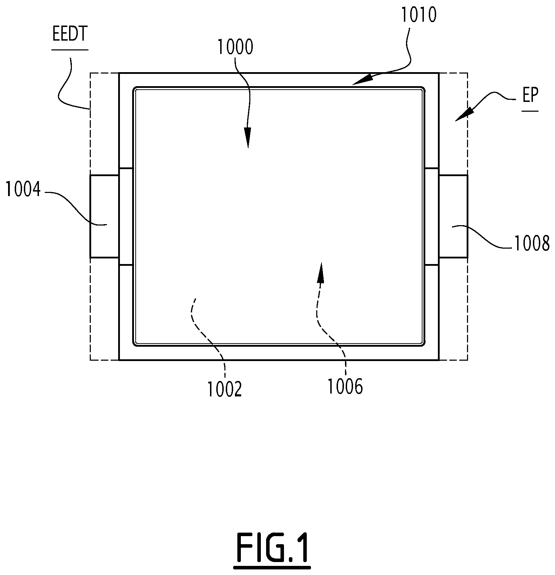

Dans ce qui suit, l'expression « vue de face » se réfère à une vue telle que montrée sur les Figures 1 à 3, 5, 8 et 9.

La Figure 1 montre une vue schématique de face d'un élément électrochimique de l'état de la technique. Cet élément électrochimique 1000 comprend une première électrode d'une première polarité 1002, un premier terminal de la première polarité 1004, une seconde électrode d'une seconde polarité 1006, et un second terminal de la seconde polarité 1008. L'élément électrochimique 1000 comprend une enveloppe 1010, vue de face de forme sensiblement rectangulaire et entourant les première et seconde électrodes 1002 et 1006. L'enveloppe 1010 forme donc deux bords courts et deux bords longs.

Les terminaux 1004 et 1008 font saillie de l'enveloppe 1010 au centre des bords courts.

L'élément électrochimique 1000 définit, vue de face, donc dans le plan de la Figure 1, une enveloppante EEDT qui entoure l'enveloppe 1010 et les électrodes 1002 et 1006. En l'occurrence, l'enveloppante EEDT est un rectangle dont les côtés s'étendent parallèlement aux bords courts de l'enveloppe 1010, coïncident avec les bords libres des terminaux et coïncident avec les bords longs de l'enveloppe 1010.

L'élément électrochimique 1000 conduit donc vue de face à un espace perdu EP, qui est exempt d'électrode et de terminal et qui correspond à la surface située entre les bords de l'enveloppante et d'une part l'enveloppe et d'autre part les terminaux.

La description qui suit contient des caractéristiques techniques de l'invention. Ces caractéristiques techniques, bien que présentées dans un contexte technique et éventuellement en combinaison avec d'autres caractéristiques techniques, peuvent être utilisées à chaque fois individuellement, sans les autres caractéristiques techniques, pour autant que ceci soit techniquement possible.

Dans la description des différents modes de réalisation, les éléments analogues portent les mêmes références. Également, sauf indication contraire, chaque caractéristique décrite en référence à un mode de réalisation de l'invention ou à une variante d'un mode de réalisation est applicable d'une manière isolée ou en toute combinaison techniquement possible aux autres modes de réalisation ou variantes.

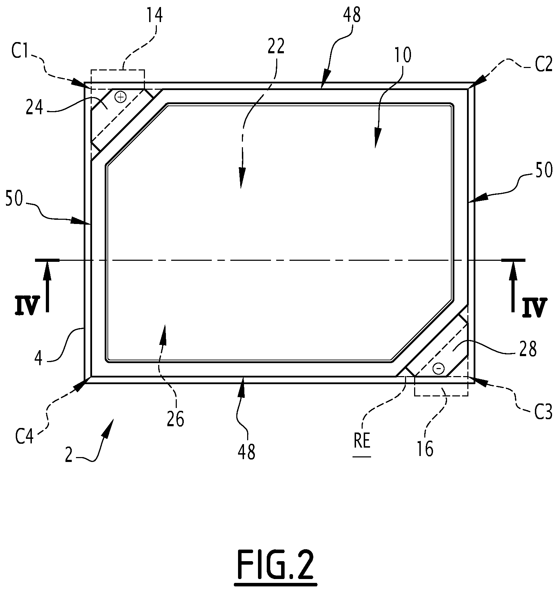

Sur la Figure 2 est représentée une batterie selon un premier mode de réalisation de l'invention, désignée par la référence générale 2. La batterie 2 est une batterie électrochimique telle qu'utilisée habituellement dans les véhicules électriques. Toutefois, d'autres domaines d'application de la batterie 2 sont envisageables, tels que le stockage d'énergie, la mobilité électrique, l'aviation, le ferroviaire.

La batterie 2 comprend un carter 4 et au moins un élément électrochimique 10. En pratique, la batterie 2 comprend plusieurs éléments électrochimiques 10 connectés en série ou en parallèle afin d'obtenir la tension électrique et/ou la capacité souhaitées. L'élément électrochimique 10 est disposé dans le carter 4.

Le carter 4 est par exemple de forme parallélépipédique, en particulier rectangle, et comprend des parois de carter, une première borne 14 et une seconde borne 16. Les parois de carter sont plus rigides que les parois de l'élément électrochimique 10 (voir ci-après).

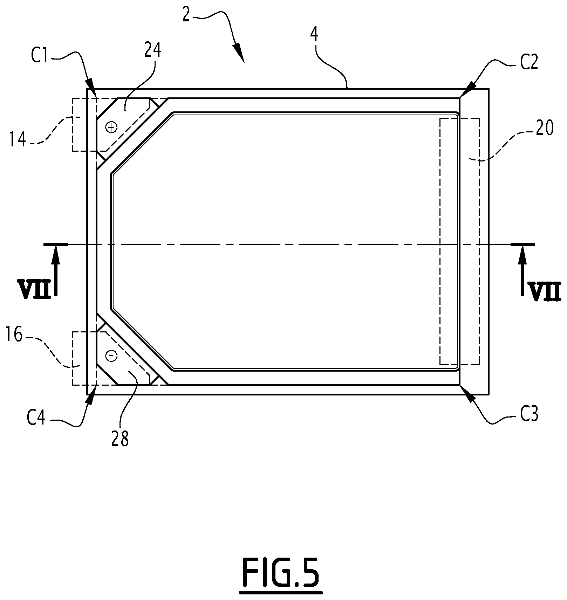

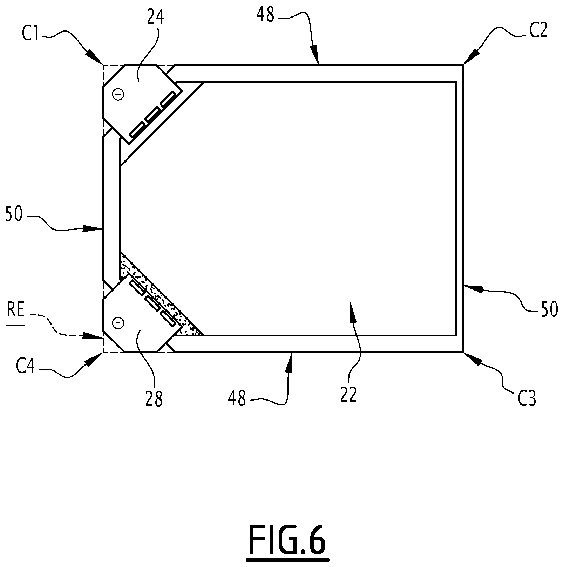

La batterie 2 peut comprendre un dispositif de refroidissement, qui n'est pas représenté sur la Figure 2, mais qui sera décrit plus en détail dans la description des Figures 5 à 9.

L'élément électrochimique 10 ou chaque élément électrochimique 10 comprend une première électrode d'une première polarité 22, un premier terminal de la première polarité 24, une seconde électrode d'une seconde polarité 26, et un second terminal de la seconde polarité 28.

L'élément électrochimique 10 est par exemple du type Lithium-Ion. La première électrode 22 comprend au moins un collecteur de courant formé d'un feuillard métallique par exemple en aluminium, revêtu sur au moins une face d'un matériau actif. Par exemple, dans le cas d'une batterie secondaire au lithium, la première électrode contient matériau actif qui peut être un oxyde métallique comprenant des atomes de lithium, tel que le dioxyde de cobalt et de lithium LCO (LiCoO₂), NMC (LiNixMny Co_{1-x-y} O₂), NCA (LiNixCoyAl_{1-x-y}O₂), LFP (LiFePO₄), LMO (LiMn₂O₄) ou des composés lithiés analogues. La première électrode 22 est par exemple l'électrode positive.

La seconde électrode 26 comprend au moins un collecteur de courant formé d'un feuillard métallique, par exemple en cuivre, revêtu sur au moins une face d'un matériau actif. Par exemple, dans le cas d'une batterie secondaire au lithium, la seconde électrode contient un matériau actif qui peut être un matériau carboné apte à insérer des atomes de lithium, tel que le graphite ou du silicium, LTO (Li₄Ti₅O₁₂) ou TNO (TiNb₂O₇). La seconde électrode 26 est par exemple l'électrode négative.

L'élément électrochimique 10 comprend un séparateur, séparant la première électrode 22 de la seconde électrode 26. Dans le cas d'une cellule électrochimique Li-lon, le séparateur est perméable aux ions de Lithium, mais isolant électronique. Le séparateur est par exemple en une membrane polyoléfine.

L'élément électrochimique 10 comprend également un électrolyte, qui peut être liquide, tel qu'un électrolyte organique contenant des sels de lithium comme le LiPF₆, solide ou gel, tel que des polymères de Polyfluorure de vinylidène (PVDF) ou un copolymère de Polyfluorure de vinylidène et d'Hexafluoropropylène (PVDF-HFP).

Le premier terminal de la première polarité 24 est relié électriquement à la première borne 14 et le second terminal de la seconde polarité 28 est relié électriquement à la seconde borne 16. Les terminaux sont adaptés pour collecter le courant de l'électrode associée. Le ou chaque premier terminal de la première polarité 24 est fixé par soudage ou brasage au collecteur de courant associé ou à l'électrode associée. De même, le ou chaque second terminal de la seconde polarité 24 est fixé par soudage ou brasage au collecteur de courant associé ou à l'électrode associée. En particulier, le ou chaque premier terminal de la première polarité 24 est fixé par soudage par ultrasons au collecteur de courant associé ou à l'électrode associée. De même, en particulier le ou chaque second terminal de la seconde polarité 28 est fixé par soudage par ultrasons au collecteur de courant associé ou à l'électrode associée.

Dans le cas du mode de réalisation des Figures 2 à 4, l'élément électrochimique comprend exactement un seul premier terminal de la première polarité 24 et un seul second terminal de la seconde polarité 28. En d'autres termes, les terminaux 24, 28 de l'élément électrochimique sont constitués par un seul premier terminal et un seul second terminal.

La première électrode de la première polarité 22 et la seconde électrode de la seconde polarité 26 sont des éléments plats et surfaciques et contiennent chacune une feuille de support et une ou deux couches d'électrode appliquées sur la feuille de support.

L'élément électrochimique 10 ou chaque élément électrochimique 10 comprend une enveloppe 40 muni d'une première paroi 42 et d'une seconde paroi 44. L'enveloppe 40 est du type « pouch », c'est-à-dire comprend des parois relativement souples et facilement déformables. Les parois de l'enveloppe 40 sont donc plus facilement déformables et moins rigides que les parois du carter.

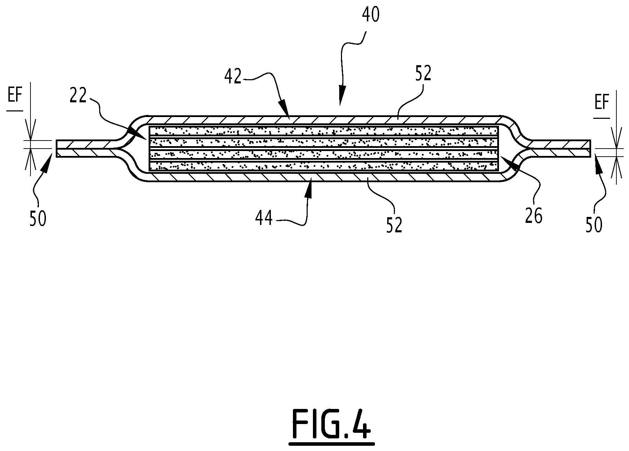

Sur la Figure 4 est représenté l'élément électrochimique 10 en coupe selon la ligne IV-IV de la Figure 2. Le carter 4 est omis sur la Figure 4.

La première paroi 42 et la seconde paroi 44 comprennent chacune une feuille en métal dont chacune a une épaisseur EF comprise entre 30 µm et 60 µm. La première paroi 42 et la seconde paroi 44 peuvent comprendre en outre un revêtement, par exemple en matière thermoplastique, disposé sur la feuille en métal. Par exemple, l'enveloppe est un film multicouches comprenant, de l'extérieur vers l'intérieur, une couche électriquement isolante et mécaniquement protectrice, une feuille en aluminium et une couche de polypropylène (PP) et/ou de polypropylène modifié chimiquement (PPa - acid modified polypropylen). De préférence, l'enveloppe est un film multicouches comprenant, de l'extérieur vers l'intérieur, une couche de Polyéthylène téréphtalate (PET), une couche de Nylon, une feuille en aluminium et une couche de polypropylène (PP) et/ou de polypropylène modifié chimiquement (PPa - acid modified polypropylen).

Comme visible sur la Figure 2, l'enveloppe 40 comprend deux premiers bords 48, en l'occurrence sensiblement parallèles l'un de l'autre, et deux seconds bords 50, en l'occurrence sensiblement parallèles l'un de l'autre, et en l'occurrence sensiblement perpendiculaires aux premiers bords. En l'occurrence, chacun des premiers bords est un bord long et chacun des seconds bords est un bord court. Le terme « court » signifie que le bord est plus court que chacun des bords longs et le terme « long » signifie que le bord est plus long que chacun des bords courts. Les premiers bords 48 sont par exemple des bords opposés l'un de l'autre et les seconds bords 50 sont par exemple également des bords opposés l'un de l'autre. Les premiers et/ou les seconds bords 48 et 50 peuvent être sensiblement rectilignes.

En variante, les premiers et/ou les seconds bords 48 et 50 ne sont pas parallèles, et forment par exemple un trapèze. En variante, le premiers et/ou les seconds bords 48 et 50 ne sont pas de longueur différente, mais de longueur identique et forment donc par exemple un carré ou un losange.

Ces premiers et seconds bords 48 et 50 forment, vue de face, généralement un quadrilatère enveloppant RE, en l'occurrence un rectangle enveloppant (Figure 2), qui est défini par les premiers et seconds bords 48 et 50 et par la prolongation de ces bords. Les bords 48 et 50 coïncident avec le quadrilatère enveloppant. Le quadrilatère enveloppant RE comprend quatre coins C1, C2, C3, et C4. Les quatre coins C1 à C4 sont disposés dans le sens horaire sur les Figures. En fonction de la longueur des premiers et seconds bords 48 et 50 et de leur disposition, le quadrilatère enveloppant RE peut également être un quadrilatère quelconque, un carré, un losange ou un trapèze.

Le premier terminal de la première polarité 24 est disposé dans un premier coin du quadrilatère enveloppant RE, en l'occurrence C1, et le second terminal de la seconde polarité 28 est disposé dans un deuxième coin du quadrilatère enveloppant, en l'occurrence C3. Ce deuxième coin est différent du premier coin. Le premier coin C1 et le deuxième coin C3 sont opposés l'un de l'autre.

Selon le mode de réalisation des Figures 2 à 4, la feuille en métal de la première paroi et la feuille en métal de la seconde paroi sont deux feuilles de base 52 en métal individuelles et séparées dont chacune comporte quatre chants. Chacun des premiers bords 48 et des second bords 50 est formé par deux chants ou zones de chant des deux feuilles de base superposés et fixés l'un à l'autre, par exemple par soudage par laser ou par thermo-soudage. Ceci est montré sur la Figure 4. L'enveloppe 40 comprend donc quatre côtés formés par une ligne de fixation, notamment une ligne de soudure.

Selon l'invention, vu de face, le premier terminal de la première polarité 24 est disposé entièrement à l'intérieur du quadrilatère enveloppant RE. Par ailleurs, vu de face, le second terminal de la seconde polarité 28 est disposé entièrement à l'intérieur du quadrilatère enveloppant RE. En d'autres termes, les premier et second terminaux 24, 28 sont disposés entièrement à l'intérieur d'un cylindre ayant une section rectangulaire de quadrilatère enveloppant RE.

Chaque premier terminal de la première polarité 24 et/ou chaque second terminal de la seconde polarité 28 a des bords qui, vue de face, coïncident avec le quadrilatère enveloppant RE.

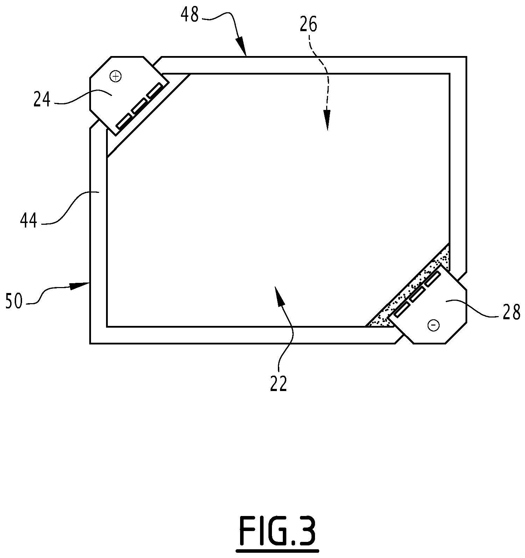

Sur la Figure 3 est représentée l'élément électrochimique 10 de la Figure 2, également vue de face, mais la première paroi 42 de l'enveloppe 40 étant omise.

Le ou chaque premier terminal de la première polarité 24 est constitué d'une superposition de feuilles d'électrode et est non-pliée. De même, chaque second terminal de la seconde polarité 28 est constituée d'une superposition de feuilles d'électrode et est non-pliée.

Sur les Figures 5 à 7 est représenté un deuxième mode de réalisation de la batterie selon l'invention, qui diffère du mode de réalisation ci-dessus uniquement par ce qui suit.

La batterie 2 comprend un dispositif de refroidissement 20 qui est adapté pour évacuer de la chaleur de l'élément électrochimique 10. Le dispositif de refroidissement 20 comprend par exemple un circuit de fluide de refroidissement et des moyens de mise en circulation de ce fluide de refroidissement.

Le premier coin, dans lequel est disposé le premier terminal de la première polarité 24, et le deuxième coin, dans lequel est disposé le second terminal de la seconde polarité 28 sont adjacents à un même des premiers bords 48 ou seconds bords 50. En l'occurrence, le premier terminal de la première polarité 24 est disposé dans le coin C1 et le second terminal de la seconde polarité 28 est disposé dans le coin C4. Les deux terminaux 24, 28 sont donc adjacents à un même second bord court 50.

En variante non représentée, le premier terminal 24 est disposé dans le coin C1 et le second terminal est disposé dans le coin C2.

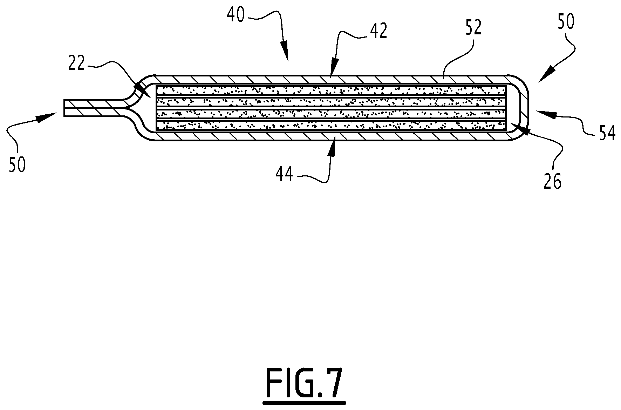

Sur la Figure 7 est représenté l'élément électrochimique 10 en coupe selon la ligne VII-VII de la Figure 5. Le carter 4 et le dispositif de refroidissement 20 sont omis sur la Figure 7.

La feuille en métal de la première paroi 42 et la feuille en métal de la seconde paroi 44 sont formées par une seule feuille de base en métal 52. Cette feuille de base en métal 52 comprend une portion repliée 54 formant un des seconds bords 50.

L'autre second bord 50 et les premiers bords 48 sont formés par des chants de la seule feuille de base en métal superposés et fixés l'un à l'autre, notamment par soudage par laser ou par thermo-soudage. L'enveloppe 40 comprend donc trois côtés formés par une ligne de fixation, notamment une ligne de soudure et un côté formé par la portion repliée 54.

En variante non représentée, la portion repliée 54 forme un des premiers bords 48.

Le dispositif de refroidissement 20 est avantageusement disposé du côté du bord formé par la portion repliée 54. Ceci permet une disposition du dispositif de refroidissement à un emplacement qui est proche des endroits de génération de la chaleur et conduit à un refroidissement efficace.

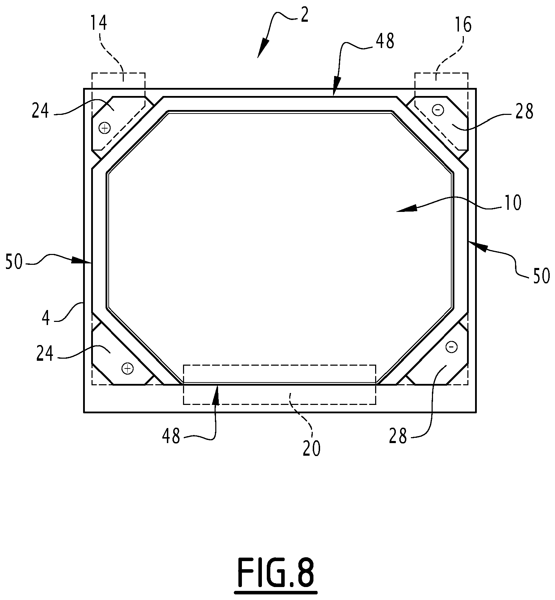

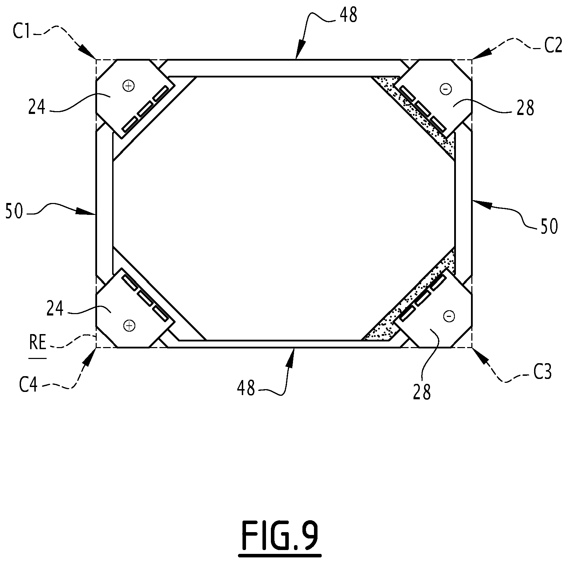

Sur les Figures 8 et 9 est représenté un troisième mode de réalisation de la batterie selon l'invention, qui diffère des modes de réalisation précédemment décrits uniquement par ce qui suit.

L'élément électrochimique 10 comprend deux premiers terminaux de la première polarité 24 disposés dans le premier coin et un troisième coin du quadrilatère enveloppant RE. Les deux premiers terminaux de la première polarité 24 sont fixés et reliés au même collecteur de courant de l'électrode associée.

L'élément électrochimique 10 comprend deux seconds terminaux de la seconde polarité 28 disposés dans le deuxième coin et un quatrième coin du quadrilatère enveloppant. Les deux seconds terminaux de la seconde polarité 28 sont fixés et reliés au même collecteur de courant de l'électrode associée.

Selon un premier principe de connexion, les deux premiers terminaux de la première polarité 24 sont connectés à une même borne 14 et les deux seconds terminaux de la seconde polarité 28 sont connectés à une même borne 16. Cette variante limite la génération de chaleur en cas de courant intense retiré à chaque borne.

Selon un second principe de connexion, un seul des premiers terminaux de la première polarité 24 et un seul des seconds terminaux de la seconde polarité 28 est connecté à une borne individuelle 14, 16. Cette variante permet d'agencer les terminaux d'une manière répondant le cas échéant aux exigences d'installation de la batterie.

Dans ce mode de réalisation, le premier et le troisième coin sont des coins adjacents de telle sorte que les deux premiers terminaux de la première polarité 24 sont adjacents à un même bord, en l'occurrence le bord court 50. Les deux premiers terminaux de la première polarité 24 sont disposés dans les coins C1 et C4.

De même, le deuxième coin et le quatrième coin sont des coins adjacents, de telle sorte que les deux seconds terminaux de la seconde polarité 28 sont adjacents à un même bord, en l'occurrence le bord court 50 opposé au bord court 50 auquel les premiers terminaux de la première polarité sont adjacents. Les deux seconds terminaux de la seconde polarité 28 sont disposés dans les coins C2 et C3.

Comme le second mode de réalisation Figures 5 à 7, ce troisième mode de réalisation comprend une seule feuille de base en métal. Comme différence, la portion repliée 54 forme un des premiers bords 48. L'autre premier bord 48 et les seconds bords 50 sont formés par des chants de la seule feuille de base en métal superposés et fixés l'un à l'autre.

En variante non représentée, le premier et le troisième coin sont des coins opposés et le deuxième coin et le quatrième coin sont des coins opposés. Dans ce cas, les emplacements de l'un des premier terminaux 24 et l'un des second terminaux 28 adjacents à un même bord long 48 des Figures 8 et 9 (par exemple les deux terminaux 24, 28 en bas des Figures 8 et 9) sont inversés.

Les différents modes de réalisations de la batterie selon l'invention apportent les avantages et effets techniques suivants :
- Grâce aux parois à feuille en métal, la batterie à une sécurité de fonctionnement importante et un volume faible.
- La batterie a une énergie importante pour un volume donné.
- La batterie a un risque d'emballement thermique faible pour une capacité donnée.
- La batterie est économique à produire et facile à assembler.
- Notamment, la disposition des terminaux dans les coins de l'enveloppe conduit à une utilisation efficace de l'espace disponible et à une souplesse d'agencement des terminaux.
- Également, la disposition en diagonale des terminaux conduit à une répartition uniforme de la chaleur lors de l'utilisation.
- La batterie permet une disposition efficace d'un dispositif de refroidissement.

## Revendications

1. Elément électrochimique (10) pour batterie, du type comprenant
- une première électrode d'une première polarité (22),
- au moins un premier terminal de la première polarité (24),
- une seconde électrode d'une seconde polarité (26),
- au moins un second terminal de la seconde polarité (28),
- une enveloppe (40) comprenant une première paroi (42) et une seconde paroi (44),
- l'enveloppe comprenant deux premiers bords (48) et deux seconds bords (50), les premiers et seconds bords formant un quadrilatère enveloppant (RE),
le ou chaque premier terminal de la première polarité (24) et/ou le ou chaque second terminal de la seconde polarité (28) étant disposé entièrement à l'intérieur du quadrilatère enveloppant (RE),
la première paroi et la seconde paroi comprenant chacune une feuille de base en métal (52),
le premier terminal de la première polarité (24) étant disposé dans un premier coin du quadrilatère enveloppant, et
le second terminal de la seconde polarité (28) étant disposé dans un deuxième coin du quadrilatère enveloppant, différent du premier coin, **caractérisé en ce que**
les feuilles de base en métal ont chacune une épaisseur (EF) comprise entre 30 µm et 60 µm.

2. Elément électrochimique selon la revendication 1, dans lequel
le premier coin et le deuxième coin sont adjacents à un même des premiers bords ou seconds bords, notamment les premiers bords étant chacun un bord long (48) et les seconds bords étant chacun un bord court (50).

3. Elément électrochimique selon l'une quelconque des revendications 1 ou 2, dans lequel les deux premiers bords (48) sont sensiblement parallèles l'un de l'autre et/ou les deux seconds bords (50) sont sensiblement parallèles l'un de l'autre, et notamment sensiblement perpendiculaires aux premiers bords.

4. Elément électrochimique selon l'une quelconque des revendications 1 à 3, dans lequel l'élément électrochimique (10) comprend exactement un seul premier terminal de la première polarité (24) et un seul second terminal de la seconde polarité (28).

5. Elément électrochimique selon l'une quelconque des revendications 1 à 3, dans lequel l'élément électrochimique (10) comprend deux premiers terminaux de la première polarité (24) disposés dans le premier coin et un troisième coin du quadrilatère enveloppant (RE), et deux seconds terminaux de la seconde polarité (28) disposés dans le deuxième coin et un quatrième coin du quadrilatère enveloppant.

6. Elément électrochimique selon la revendication 5, dans lequel
soit le premier coin et le troisième coin sont des coins adjacents (C1, C4) et le deuxième coin et le quatrième coin sont des coins adjacents (C2, C3),
soit le premier coin et le troisième coin sont des coins opposés et le deuxième coin et le quatrième coin sont des coins opposés.

7. Elément électrochimique selon l'une quelconque des revendications précédentes, dans lequel la feuille en métal de la première paroi et la feuille en métal de la seconde paroi sont formées par une seule feuille de base en métal (52), la feuille de base en métal comprenant une portion repliée (54) formant un des premiers ou seconds bords, les autres des premiers bords et seconds bords étant formés par des chants de la feuille de base en métal superposés et fixés l'un à l'autre, notamment par thermo-soudage.

8. Elément électrochimique selon l'une quelconque des revendications 1 à 7, dans lequel la feuille en métal de la première paroi (42) et la feuille en métal de la seconde paroi (42) sont deux feuilles de base (52) en métal individuelles et séparées dont chacune comporte quatre chants et dans lequel chacun des premiers bords et des seconds bords est formé par deux chants des deux feuilles de base superposés et fixés l'un à l'autre, notamment par thermo-soudage.

9. Elément électrochimique selon l'une quelconque des revendications précédentes, dans lequel le ou chaque premier terminal de la première polarité (24) et/ou chaque second terminal de la seconde polarité (28) est constitué d'une superposition de feuilles d'électrode et est non-pliée.

10. Batterie du type comprenant un carter et au moins un élément électrochimique, **caractérisée en ce que** l'élément électrochimique est un élément selon l'une des revendications précédentes.

11. Batterie selon la revendication 10, dans laquelle la batterie comprend un dispositif de refroidissement et dans lequel le dispositif de refroidissement est adapté pour évacuer de la chaleur de l'élément électrochimique et en particulier d'un bord long ou du bord formé par la portion repliée.

## Patentansprüche

1. Elektrochemische Zelle (10) für eine Batterie, des Typs, der Folgendes umfasst:
- eine erste Elektrode einer ersten Polarität (22),
- mindestens einen ersten Anschluss der ersten Polarität (24),
- eine zweite Elektrode einer zweiten Polarität (26),
- mindestens einen zweiten Anschluss der zweiten Polarität (28),
- eine Hülle (40), umfassend eine erste Wand (42) und eine zweite Wand (44),
- die Hülle umfassend zwei erste Ränder (48) und zwei zweite Ränder (50), wobei
die ersten und die zweiten Ränder ein umhüllendes Viereck (RE) bilden,
wobei der oder jeder erste Anschluss der ersten Polarität (24) und/oder der oder jeder zweite Anschluss der zweiten Polarität (28) vollständig innerhalb des umhüllenden Vierecks (RE) angeordnet ist,
die erste Wand und die zweite Wand umfassend jeweils ein Metallbasisblech (52),
wobei der erste Anschluss der ersten Polarität (24) in einer ersten Ecke des umhüllenden Vierecks angeordnet ist, und
der zweite Anschluss der zweiten Polarität (28) in einer zweiten Ecke des umhüllenden Vierecks angeordnet ist, die sich von der ersten Ecke unterscheidet, **dadurch gekennzeichnet, dass**
die Metallbasisbleche jeweils eine Stärke (EF) zwischen 30 µm und 60 µm aufweisen.

2. Elektrochemische Zelle nach Anspruch 1, wobei
die erste Ecke und die zweite Ecke an ein und denselben der ersten Ränder oder der zweiten Ränder angrenzen, wobei insbesondere die ersten Ränder jeweils ein langer Rand (48) und die zweiten Ränder jeweils ein kurzer Rand (50) sind.

3. Elektrochemische Zelle nach einem der Ansprüche 1 oder 2, wobei die zwei ersten Ränder (48) im Wesentlichen parallel zueinander sind und/oder die zwei zweiten Ränder (50) im Wesentlichen parallel zueinander und insbesondere im Wesentlichen senkrecht zu den ersten Rändern sind.

4. Elektrochemische Zelle nach einem der Ansprüche 1 bis 3, wobei die elektrochemische Zelle (10) genau einen einzigen ersten Anschluss der ersten Polarität (24) und einen einzigen zweiten Anschluss der zweiten Polarität (28) umfasst.

5. Elektrochemische Zelle nach einem der Ansprüche 1 bis 3, wobei die elektrochemische Zelle (10) zwei erste Anschlüsse der ersten Polarität (24), die in der ersten Ecke und einer dritten Ecke des umhüllenden Vierecks (RE) angeordnet sind, und zwei zweite Anschlüsse der zweiten Polarität (28), die in der zweiten Ecke und einer vierten Ecke des umhüllenden Vierecks angeordnet sind, umfasst.

6. Elektrochemische Zelle nach Anspruch 5, wobei
entweder die erste Ecke und die dritte Ecke benachbarte Ecken (C1, C4) sind und die zweite Ecke und die vierte Ecke benachbarte Ecken (C2, C3) sind,
oder die erste Ecke und die dritte Ecke gegenüberliegende Ecken sind und die zweite Ecke und die vierte Ecke gegenüberliegende Ecken sind.

7. Elektrochemische Zelle nach einem der vorherigen Ansprüche, wobei das Metallblech der ersten Wand und das Metallblech der zweiten Wand durch ein einzelnes Metallbasisblech (52) gebildet sind, das Metallbasisblech umfassend einen gefalzten Abschnitt (54), der einen von dem ersten oder dem zweiten Rand bildet, wobei der andere von dem ersten und dem zweiten Rand durch übereinandergelegte und aneinander befestigte Ränder des Metallbasisblechs aus Metall gebildet sind, insbesondere durch Thermoverschweißung.

8. Elektrochemische Zelle nach einem der Ansprüche 1 bis 7, wobei das Metallblech der ersten Wand (42) und das Metallblech der zweiten Wand (42) zwei einzelne und getrennte Basisbleche (52) aus Metall sind, wovon jedes vier Ränder aufweist, und wobei jeder der ersten Ränder und der zweiten Ränder durch zwei Ränder der zwei Basisbleche gebildet ist, die übereinandergelegt und aneinander befestigt sind, insbesondere durch Thermoverschweißung.

9. Elektrochemische Zelle nach einem der vorherigen Ansprüche, wobei der oder jeder erste Anschluss der ersten Polarität (24) und/oder jeder zweite Anschluss der zweiten Polarität (28) aus einer Überlagerung von Elektrodenfolien besteht und nicht gefaltet ist.

10. Batterie des Typs, der ein Gehäuse und mindestens eine elektrochemische Zelle umfasst, **dadurch gekennzeichnet, dass** die elektrochemische Zelle eine Zelle nach einem der vorherigen Ansprüche ist.

11. Batterie nach Anspruch 10, wobei die Batterie eine Kühlvorrichtung umfasst und wobei die Kühlvorrichtung angepasst ist, um Wärme von der elektrochemischen Zelle und insbesondere von einem langen Rand oder dem Rand, der durch den gefalzten Abschnitt gebildet ist, abzuleiten.

## Claims

1. An electrochemical cell (10) for a battery, of the type comprising
- a first electrode of a first polarity (22),
- at least one first terminal of the first polarity (24),
- a second electrode of a second polarity (26),
- at least one second terminal of the second polarity (28),
- an envelope (40) comprising a first wall (42) and a second wall (44),
- the envelope comprising two first edges (48) and two second edges (50),
the first and second edges forming an enveloping quadrilateral (RE),
the or each first terminal of the first polarity (24) and/or the or each second terminal of the second polarity (28) being disposed entirely within the enveloping quadrilateral (RE),
the first wall and the second wall each comprising a metal base foil (52),
the first terminal of the first polarity (24) being located in a first corner of the enveloping quadrilateral and
the second terminal of the second polarity (28) being located in a second corner of the enveloping quadrilateral, different from the first corner, **characterised in that**
the metal base foils each have a thickness (EF) of between 30 µm and 60 µm.

2. The electrochemical cell according to claim 1, wherein
the first corner and the second corner are adjacent to the same one of the first edges or the second edges, in particular the first edges each being a long edge (48) and the second edges each being a short edge (50).

3. The electrochemical cell according to any of claims 1 or 2, wherein the two first edges (48) are substantially parallel to each other and/or the two second edges (50) are substantially parallel to each other, and in particular substantially perpendicular to the first edges.

4. The electrochemical cell according to any of claims 1 to 3, wherein the electrochemical cell (10) comprises exactly one first terminal of the first polarity (24) and exactly one second terminal of the second polarity (28).

5. The electrochemical cell according to any of claims 1 to 3, wherein the electrochemical cell (10) comprises two first terminals of the first polarity (24) arranged in the first corner and a third corner of the enveloping quadrilateral (RE), and two second terminals of the second polarity (28) arranged in the second corner and a fourth corner of the enveloping quadrilateral.

6. The electrochemical cell according to claim 5, wherein
either the first corner and the third corner are adjacent corners (C1, C4) and the second corner and the fourth corner are adjacent corners (C2, C3),
or the first corner and the third corner are opposite corners and the second corner and the fourth corner are opposite corners.

7. The electrochemical cell according to any of the preceding claims, wherein the metal foil of the first wall and the metal foil of the second wall are formed by a single metal base foil (52) the metal base foil comprising a folded portion (54) forming one of the first or second edges, the other of the first edges and second edges being formed by edges of the metal base foil superimposed and attached to each other, in particular by heat welding.

8. The electrochemical cell according to any of the claims 1 to 7, wherein the metal foil of the first wall (42) and the metal foil of the second wall (42) are two separate, individual metal base foils (52), each of which has four edges, and wherein each of the first edges and the second edges is formed by two edges of the two base foils superimposed and attached to one another, in particular by heat welding.

9. The electrochemical cell according to any of the preceding claims, wherein the or each first terminal of the first polarity (24) and/or each second terminal of the second polarity (28) consists of a superposition of electrode foils and is not folded.

10. A battery of the type comprising a housing and at least one electrochemical cell, **characterised in that** the electrochemical cell is a cell according to one of the preceding claims.

11. The battery according to claim 10, wherein the battery comprises a cooling device and wherein the cooling device is adapted to remove heat from the electrochemical cell, and in particular from a long edge or from the edge formed by the folded portion.
